Europäisches Patentamt

European Patent Office

Office européen des brevets

(11) Publication number: **0 425 174 A2**

# EUROPEAN PATENT APPLICATION

(21) Application number: **90311369.4**

(22) Date of filing: **17.10.90**

(51) Int. Cl.⁵: **G06F 15/353**

(30) Priority: **24.10.89 US 426912**

(43) Date of publication of application:
**02.05.91 Bulletin 91/18**

(84) Designated Contracting States:
**DE FR GB IT**

(71) Applicant: **International Business Machines
Corporation
Old Orchard Road**
**Armonk, N.Y. 10504(US)**

(72) Inventor: **Luken, William Louis, Jr.
2 Orchard Hill Road
Ulster Park, New York 12487(US)**

(74) Representative: **Harris, Ian Richard
IBM United Kingdom Limited Intellectual
Property Department Hursley Park
Winchester, Hants. SO21 2JN(GB)**

(54) **Parametric curve evaluation for a computer graphics display system.**

(57) A method and apparatus are described for evaluating and rendering parametric curves. The apparatus includes a system memory connected to a pipelined arrangement of a graphics control processor, a plurality of parallel floating point processors, another floating point processor, a clipping processor and a frame buffer. The method includes: organizing and storing of NURBS data in system memory as a sequence of data records such that successive spans of a parametric curve of order k are defined by successive individual data records in conjunction with the immediately preceding 2k-3 prior data records; transforming the control points from modelling coordinates to view coordinates (x,y,z); multiplying the transformed control point coordinates by a weight yielding wx, wy, wz, w; simultaneously within each parallel floating point processor evaluating the b-spline functions for one component of the coordinate set (wx, wy, wz, w) for determined parameter points; eliminating the weight from wx, wy, wz, w yielding geometric coordinates x,y,z for points on the curve, clipping the geometric coordinates to the current viewing boundaries and drawing the clipped vectors as straight line segments on a screen of a computer graphics display system.

Fig. 4

## PARAMETRIC CURVE EVALUATION FOR A COMPUTER GRAPHICS DISPLAY SYSTEM

This invention relates to apparatus and method for evaluating and rendering parametric curves for a computer graphics display system.

The evolution of computer technology has resulted in the creation of a sophisticated technical art devoted to the representation of graphical information generated by computers. This art is referred to as computer graphics. In recent years, the use of 3-dimensional computer graphics in scientific and engineering applications has increased, along with the demand for realistic images.

Besides lines, markers and polygons, computer graphics displays today support more general geometric primitives, such as parametric curves. However, the methods used, at present, for evaluating and rendering curves in such computer graphics display systems are often inefficient and require complicated and extensive external control logic.

It is known that parametric curves can be represented in b-spline form and others have attempted, in the past, to evaluate and render curves therefrom. For example, a conventional CAD/CAM application uses a graphics workstation by sending down polylines which make up a curve stored in the host computer data base, as a b-spline curve. According to this procedure, the host computer decomposes the spline curve into straight vectors, and then sends the vectors to the graphics workstation for conventional processing and subsequent display. This procedure is inefficient and fails to take advantage of the many attractive attributes of the b-splines.

U.S. Patent 4,760,548 describes a method and apparatus of providing a visual representation of a curve wherein curve data is provided by a b-spline equation computed with a forward difference technique using scaled integer variables. However, this approach suffers from a number of drawbacks. It supports only uniform non-rational b-splines, a subset of the broader class of non-uniform rational b-splines (NURBS) and cannot effectively render certain curves such as circles. This earlier approach operates on individual spans of a curve in isolation from neighboring spans and depends on integer arithmetic to avoid accumulation of errors obtained when using floating point arithmetic for the forward difference algorithm. There are significant penalties in terms of efficiency, speed and utility associated with these limitations.

U.S. Patent 4,855,935 describes a "Method and Apparatus For Rendering Vectors Using Bresenham Parameters." This approach, like the one in U.S. Patent 4,760,548 does not support NURBS, is strongly dependent on the forward difference algorithm, operates on individual spans in isolation from neighboring spans, depends on integer arithmetic, seems specific to the cubic form and, further, converts a curve directly to single pixels.

None of the known prior art approaches fully capitalize on NURBS data in evaluating and rendering parametric curves. Accordingly, a need exists for a method and apparatus for evaluating and rendering NURBS data representative of a parametric curve, in an efficient, accurate and rapid fashion.

The proposed PHIGS (Programmer's Hierarchical Interactive Graphics Standard) PLUS standard for interactive 3-d graphics, supports the definition of curves in terms of NURBS and, thus, reinforces this need.

In accordance with a first aspect of the invention, there is provided a method of converting NURBS data representative of a parametric curve into geometric coordinates of vertices of a polyline for subsequent rendering on the screen of a computer graphics display system, said curve being composed of successive spans, comprising the steps of:

organising and locating the NURBS data in memory as a sequence of data records, a first subset of said sequence defining a first span of the curve and each successive individual data record of the sequence, in conjunction with prior data records, defining a corresponding successive span of the curve;

reading said first subset of data records in said sequence and employing said subset to evaluate the coordinates of determined parameter points along the first span of the curve; and

reading each successive individual data record of the sequence and evaluating the coordinates of determined parameter points along the corresponding successive span therewith.

Preferably, the graphics control processor also transforms control points associated with the parametric curve from modeling coordinates to view coordinates, converts the transformed control point coordinates to homogeneous coordinates, determines a parametric coordinate interval for tessellating the parametric curve, and generates a series of interval spaced parameter points to be used in the evaluation.

In a preferred embodiment of the invention, the parallel floating point processors implement a Cox-DeBoor process in performing evaluation. One of the parallel processors provides a weight output for each parameter point evaluated and the further floating point processor calculates the reciprocal of the weight and multiplies the reciprocal by the outputs of the three remaining parallel processors to obtain the geometric coordinates. A clipping processor and frame buffer can advantageously be arranged in series with the output of the further floating point processor and operate in pipeline fashion therewith.

Preferably, the NURBS data is arranged in the following sequence to allow sharing of such data by successive spans of a complex curve:

a first sequence portion specifying the order k and number of control points n of the curve;

a second sequence portion comprising knot values for the first through the k-1 knots of the curve;

a third sequence portion comprising k-1 successive sets of data, each set comprising coordinates and an associated weight w for a control point and a knot value, the data sets including data for the first through k-1 control points and k through 2k-2 knots of the curve;

a fourth sequence portion comprising n-k additional successive sets of data, these data sets including data for the k through n control points and 2k-1 through n+k-1 knots of the curve, and tesselation parameters 1 through n-k+1; and

a fifth sequence portion comprising a n+k knot value.

The invention also provides a method of evaluating and rendering a parametric curve of order k upon a screen of a computer graphics display system, the curve being represented by NURBS data and composed of successive spans, each span being defined by k control points and 2k-2 knot values, comprising the steps of:

organising and locating the NURBS data including modelling coordinates of control points and associated weights and knot values in a memory as a sequence of data records such that successive spans of the parametric curve are defined by individual successive data records in conjunction with the immediately preceding 2k-3 prior data records of the sequence;

reading the data records from memory in said sequence;

transforming the control point modelling coordinates to view coordinates;

multiplying the transformed coordinates of a control point by its associated weight to produce a set of homogenous coordinates wx, wy, wz, w for each control point;

calculating a parametric coordinate interval and generating therefrom a series of parameter points, successive parameter points being spaced apart by said interval;

with parallel floating point processors simultaneously evaluating the b spline functions for each component of the coordinate set at each parameter point of said series;

eliminating the weight from the results of the evaluation step to yield geometric coordinates for the series of parameter points;

clipping vectors defined by each sequential pair of points in geometric coordinates to a current viewing window; and

drawing the clipped vectors as straight line segments on a screen of a computer graphics display system to thereby render the parametric curve.

In accordance with a second aspect of the present invention, there is provided apparatus for converting NURBS data representative of a parametric curve of order k into geometric coordinates of vertices of a polyline for subsequent rendering on the screen of a computer graphics display system, said curve being composed of successive spans, each span being defined by k control points and 2k-2 knot values, comprising:

memory means for storing NURBS data of said curve as a sequence of data records such that successive spans of the curve are defined by successive individual data records in conjunction with a plurality of immediately preceding data records of the sequence;

graphics control processor means for reading the data records from said memory means in said sequence and for converting control point coordinates to a set of homogenous coordinates;

a plurality of parallel floating point processors for receiving data from said graphics control processor means and simultaneously evaluating the b-spline functions of respective ones of said set of homogenous coordinates at each of a series of parameter points along the curve; and

a further floating point processor for receiving the outputs of said parallel floating point processors and converting said outputs into geometric coordinates of said parameter points for subsequent rendering of the curve on a screen of the computer graphics display system.

An apparatus and method for evaluating and rendering parametric curves based on NURBS, in accordance with the present invention, offers many advantages including high performance, good numerical stability, cost effectiveness, high speed and accuracy, greater control over the curves, compatibility with the proposed PHIGS PLUS standard, and the elimination of data redundancy. Further, a computer graphics display system can be allowed to fully capitalize on the inherent characteristics and advantages of NURBS, including such features as the ability to construct complex curves using low order NURBS, local control, the convex hull property, the ability to render conic sections accurately using weights, invariance with respect to coordinate transformations and significant data compression.

An embodiment of the invention will be described hereinafter with reference to the accompanying drawings in which:

Figure 1 is an illustration of a two dimensional curve composed of three successive spans each represented by a different set of polynomials;

Figure 2 is an illustration of a NURBS curve C and its six control points;

Figure 3 is an illustration of a span ($t_3$ - $t_4$) of curve C in two dimensional coordinate space and of the span and three knot values ($t_1$, $t_2$, $t_3$) preceding it and three knot values ($t_4$, $t_5$, $t_6$) following it in parameter space;

Figure 4 is a block diagram showing the component parts and interconnection of a curve evaluation and rendering apparatus constructed in accordance with the present invention;

Figure 5 represents the data structure for a three dimensional NURBS curve as it is stored in system memory;

Figures 6a and 6b present a flowchart of the operations of a curve evaluation system in accordance with the present invention;

Figure 6c presents a flowchart of the commands sent by the parallel floating point processors and the next processor in pipeline;

Figure 6d presents a flowchart of the operations within the parallel floating point processors and subsequent processors in accordance with the present invention;

Figures 7a-7c illustrate a stack of knots within each of the parallel floating point processors at various stages of operation;

Figures 8a and 8b illustrate a stack within the graphics control processor at various stages of operation;

Figures 9a and 9b illustrate control point stacks within the individual parallel floating point processors at various stages;

Figures 10a and 10b are illustrations useful in understanding how to calculate the tessellation parameter used in the present invention; and

Figures 11a-11f depict the application of the Cox-DeBoor evaluation method preferably used in the present invention.

There is described hereinafter, a system for drawing parametric curves based on non-uniform rational b-splines (NURBS) using parallel and pipelined processors to obtain high performance. For an extensive review of the related terms and mathematics see "An Introduction to Splines for Use in Computer Graphics & Geometric Modelling" by R.H. Bartels, J.C. Beatty, and B.A. Barsky (Morgan Kaufmann, 1987).

Briefly, non-uniform rational b-splines (NURBS) are a class of parametric functions, which are used to represent parametric curves. NURBS curves depend on a parametric coordinate (t), which increases monotonically as one moves from the start of a curve to the end. This parametric coordinate is in addition to the geometric coordinates (x,y,z). Therefore, for a 3-D curve, as an example, we have:

$x = X(t)$

$y = Y(t)$

$z = Z(t),$

where $X(t)$, $Y(t)$, and $Z(t)$ for $t_{min} \leq t \leq tmax$ are functions of the parametric coordinate t.

Parametric curves may also be defined in terms of simple polynomials, and any such parametric polynomial function may be represented exactly by a corresponding NURBS function.

NURBS curves may be defined in either rational or non-rational forms. In the non-rational form, each component (x,y,z) of a NURBS curve may be determined by evaluating a polynomial function of the parametric coordinate:

$$X(t) = \sum_{i=0}^{m} c_{xi} t^i$$

$$Y(t) = \sum_{i=0}^{m} c_{yi} t^i$$

$$Z(t) = \sum_{i=0}^{m} c_{zi} t^i$$

In the rational form, there is an additional function called the weight: $W(t) = \sum c_{wi} t^i$. In this case, the geometric coordinates are determined by ratios of polynomials:

$X(t) = WX(t)/W(t)$
$Y(t) = WY(t)/W(t)$
$Z(t) = WZ(t)/W(t)$

where $WX(t)$, $WY(t)$, $WZ(t)$ are polynomials similar to those which specify $X(t)$, $Y(t)$ and $Z(t)$ for the non-rational case.

Each NURBS function, may be characterized by the degree (m) corresponding to the highest power of the parametric coordinate, and the order (k), which equals $m + 1$ corresponding to the number of linearly independent terms in a polynomial of degree m. Thus, for example, a quadratic function, $ax^2 + bx + c$, has a degree 2 and order 3.

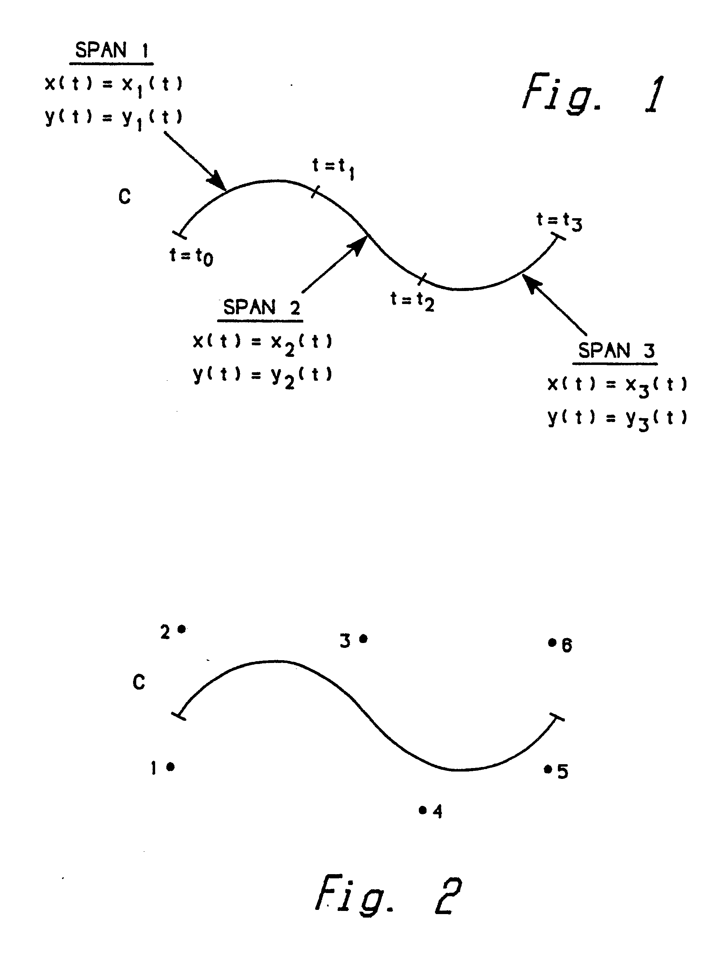

A NURBS function may be represented by multiple sets of coefficients, each of which is valid only for a limited range of the parametric coordinate. Thus, a curve may be divided into a sequence of successive spans, each represented by different polynomials. This is illustrated by the 2 dimensional curve C in Fig. 1, which consists of three spans. The first span is defined by parameter values t running from $t_0$ to $t_1$, and the coordinates of this portion of the curve are determined by the polynomials:

$$X_1(t) = \sum_{i=0}^{m} c_{x1i} t^i$$

$$Y_1(t) = \sum_{i=0}^{m} c_{y1i} t^i$$

The second span is defined by parametric values t running from $t_1$ to $t_2$, and the coordinates of this portion of the curve are determined by the polynomials

$$X_2(t) = \sum_{i=0}^{m} c_{x2i} t^i$$

$$Y_2(t) = \sum_{i=0}^{m} c_{y2i} t^i \text{ and so forth.}$$

NURBS are determined by control points, weights, and knot vectors. The control points provide the primary control over the geometry of a curve. A curve may have n control points, where n must be greater than or equal to the order (k) of the curve. Each span of a curve has k control points. The control points determine the general shape of the curve, but the curve usually does not pass through these points. Figure 2 illustrates a curve C with 6 control points labelled 1-6.

The weight values are only used to define the rational form of the NURBS curves. In the rational form, a weight (w) is associated with each of the coordinates (x,y,z) of the control points. The weights and coordinates are combined to form the homogeneous coordinates (wx,wy,wz,w), which define the control points for a set of four parametric polynomial functions, WX(t), WY(t), WZ(t), and W(t). The resulting geometric coordinates are determined by the ratios:

x(t) = WX(t)/W(t)

y(t) = WY(t)/W(t)

z(t) = WZ(t)/W(t)

The weights are required to be positive and greater than zero. The values of the weights are usually close to unity, and the rational form reduces to the non-rational form if the weights are all equal.

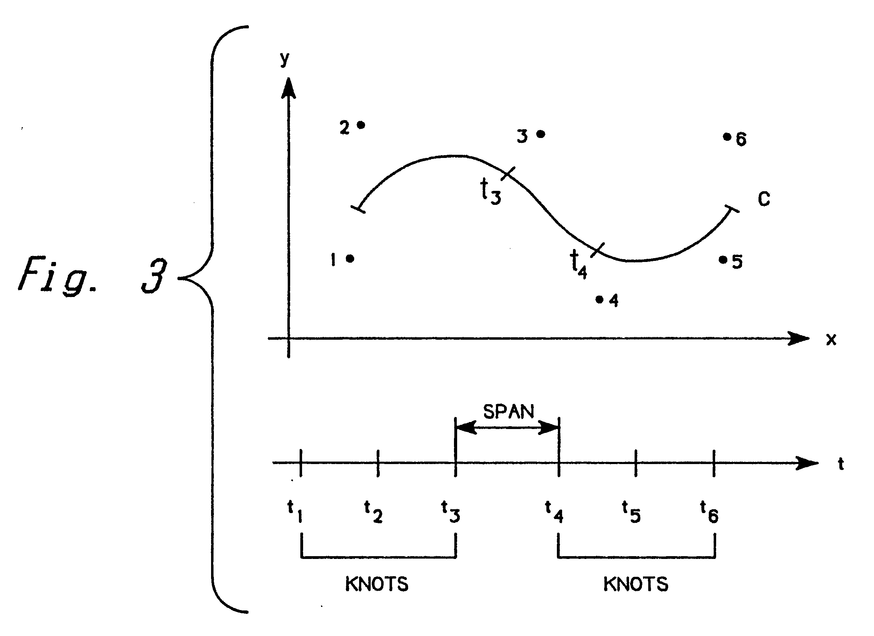

The knot vectors for a curve define a partitioning of the parameter space for the parametric coordinate (t). The knot vector for a curve of order k with n control points will have n + k components, of which the first and last are never used. Each span in the curve depends on 2m successive knot values, where m = k - 1 and k is the order of the curve. These knot values are divided into two groups: one having m knot values preceding the span and the other having m knot values following the span. For an illustration, see Figure 3 in which a span ($t_3$ - $t_4$) of curve C has 3 knot values ($t_1$, $t_2$, $t_3$) preceding the span and 3 knot values ($t_4$, $t_5$, $t_6$) following the span. The knot values will determine if the b-spline is uniform or non-uniform. If the values of the knots are spaced uniformly (for example, 0, 1, 2, 3), then the result is a uniform b-spline. For a non-uniform b-spline, the knot values may be separated by irregular intervals, and knot values may be repeated, as in the knot vector (0.0, 1.2, 1.5, 1.5, 2.7, 9.0).

In this description, the term NURBS is used generically and is meant to encompass the special cases of non-rational (weights set equal to 1) and uniform b-splines.

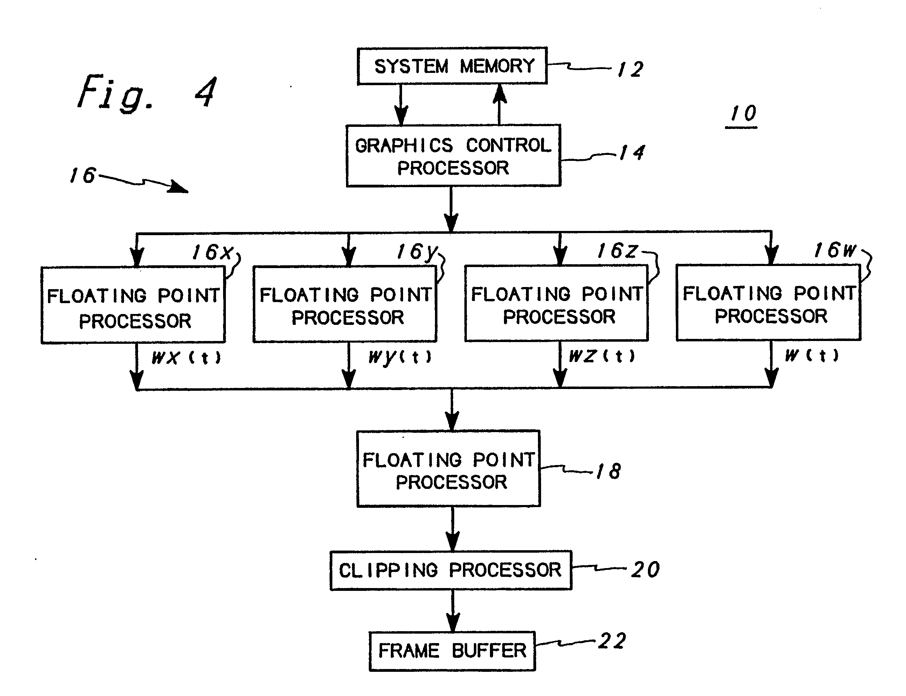

With this basic understanding of the underlying mathematics, a preferred embodiment of the invention will now be described. A curve evaluation and rendering system (10) constructed in accordance with the principles of the present invention, is represented in Figure 4, and includes the following principal components:

(1) System Memory (12);

(2) A Graphics Control Processor (14); and, operating in pipeline fashion:

(3) A group (16) of four floating point processors (16x, 16y, 16z and 16w) arranged in parallel;

(4) A further floating point processor (18) connected to the outputs of the parallel floating point processors (16);

(5) A clipping processor (20); and

(6) A frame buffer (22).

The system memory (12) contains the NURBS data for each parametric curve. The data is stored in memory 12 and is transmitted to the graphics control processor (14) in a structured arrangement or sequence that permits the sharing of data by successive spans, thereby eliminating data redundancy.

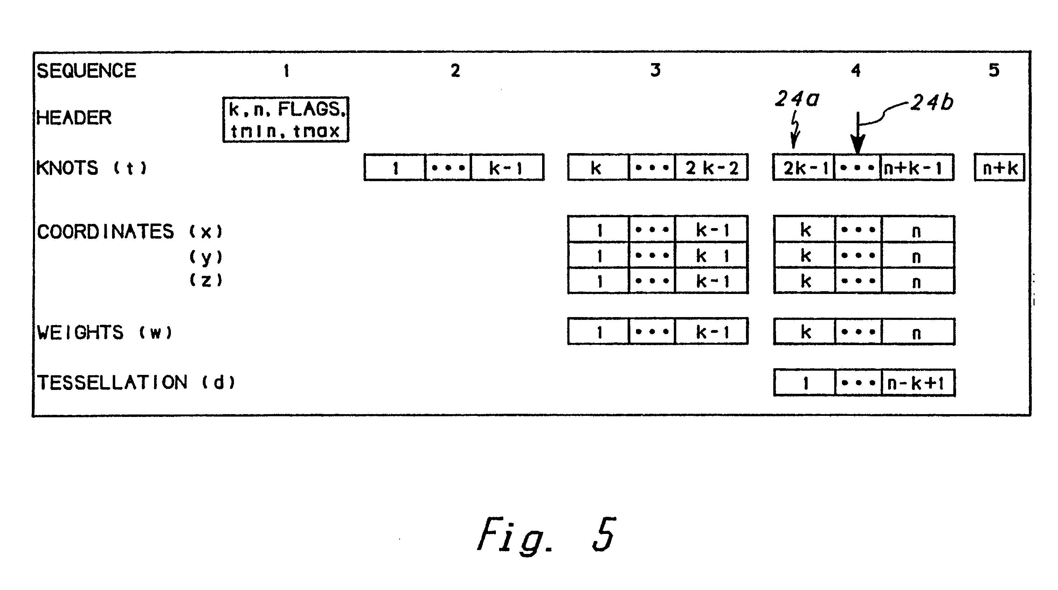

Referring to Figure 5, the structured arrangement of data is indicated by the sequence portions or divisions 1-5. At sequence portion one, prefatory header information is located in system memory. The header information includes: the order (k), where k is an integer from 2 to kmax, where kmax is the maximum order supported by the floating point processors; number of control points (n), which must be ≥ k; curve type flag, which may be 1 for non-rational, 0 for rational; curve status flag, which may be 0 for tessellation parameters undefined, 1 for tessellation parameters defined; tmin and tmax, which specify the range of the parametric coordinate. Tessellation parameters will be explained subsequently.

At sequence portion two, the values of initial knots 1 through k-1 of the curve, are located in system memory.

At sequence portion 3, the values of the k through 2k-2 knots, x, y and z coordinates of successive control points 1 through k-1, and associated weights for control points 1 through k-1, are located in system memory. This data is grouped as depicted by the vertical columns; each vertical column in Fig. 5 comprises an individual data set or record.

Sequence portion 4 contains similar successive data sets or records, each augmented by tessellation parameter (d). Each successive data record of sequence portion 4 will complete a successive span of the curve. A span is defined by k control points and 2k-2 knots. Knot 1, in sequence portion 2, is not used for curve evaluation. Thus, the column or data record labelled 24a containing knot value 2k-1, control point coordinates x(k), y(k), z(k), weight w(k), and tessellation data d(1), along with the data records of sequence portion 3, and the knot values for knots 2 through k-1 of sequence portion 2, complete the first span. The second span is completed by the second set or column of data of sequence 4 along with the prior 2k-3 columns of data (i.e. prior k-1 control points and associated weights, and 2k-3 knot values). Subsequent spans are similarly constructed. By processing in this manner, where each new span uses one succeeding data set of sequence 4 and the immediately preceding 2k-3 data records previously stored, redundancy of data is eliminated.

At sequence portion 5, the final knot value n + k is located in system memory. However, this knot is not used in the curve evaluation process.

Referring again to figure 4, the graphics control processor (14) reads the data stored in system memory (12), in the sequence previously explained, and can write data back to system memory, as indicated by the two-way arrows shown in Fig. 4. The graphics control processor transforms control point data from modeling coordinates to view coordinates, converts the transformed control point data to homogeneous coordinates (wx, wy, wz, w), determines a parametric coordinate interval (dt) for tessellating the parametric coordinate, generating a series of interval spaced parameter points (PC), and also transmits commands and data to the four parallel floating point processors (16), as more fully explained hereinafter. Processors 16x, 16y, 16z and 16w independently, simultaneously and synchronously evaluate the b-spline functions of a respective one of the homogeneous coordinates wx, wy, wz and w for each parameter point PC. The outputs wx(t), wy(t), wz(t) and w(t) from processors 16x, 16y, 16z and 16w, respectively, are provided in series to floating point processor 18. Processor 18 calculates the reciprocal of w(t) and multiplies wx(t), wy-(t) and wz(t) by this reciprocal to determine the corresponding geometric coordinates x, y, z of vertices of the polyline representative of the curve. The polyline coordinates are processed in known fashion by clipping processor 20 (i.e. vectors defined by each sequential pair of vertices are clipped to the current viewing window) and sent to frame buffer 22 for rendering of the curve upon a monitor screen (not shown) of the computer graphics display, in conventional fashion.

A particular implementation of the present invention will now be described. System memory 12 can comprise 2 to 4 Mbytes (or more) of random access memory (RAM). The system memory must be capable of holding the data for at least one parametric curve and typically contains a display list composed of various graphics elements, i.e. primitives and attributes, including NURBS curves. Graphics control processor 14 includes: a floating point multiplier; a floating point adder, also used as an accumulator for the multiplier; a sequencer; ability to access at least 32k code memory; ability to access at least 32k data memory; 32 integer registers; and 32 registers for floating point operation. Processor 14 can be advantageously embodied by a 10 Mhz Weitek chip set (a XL-8136 programmable sequencer, a XL-3132 floating point processor unit, and KL-8137 integer processing unit, working together) available from Weitek of Sunnyvale, California.

Floating point processors 16x, 16y, 16z, 16w and 18 can each be a VLSI processor with 32-bit floating point capability. Each of these processors includes a floating point multiplier; a floating point adder, also used as an accumulator for the multiplier; a simple sequencer; RAM for microcode; FIFO for input and output for interface; and sixty-four registers for storing data. Floating point processors are known generally in the art. Commonly assigned U.S. patent application serial number 331,021, filed March 28, 1989, discloses an invention which provides special input and output FIFOs for advantageous parallel and/or pipelined interconnection in the manner herein described, and is hereby incorporated herein by reference. Clipping processor 20 and frame buffer 22 may each contain multiple similar processors in any number and configuration which provides adequate performance.

In general, when a NURBS curve is encountered in the display list of memory 12, the control points are transformed by the graphics control processor 14. The resulting transformed control points are converted to homogeneous coordinates (wx, wy, wz, w) and sent to the pipelined parallel processors 16 where individual coordinates are retained by respective processors 16x, 16y, 16z and 16w. The graphics control processor 14 then determines how to tessellate the parametric coordinate (t) and sends a series of parameter values PC to the pipeline. Processors 16 simultaneously evaluate the wx, wy, wz, and w components in parallel for each of these values of the parametric coordinate. The resulting values of wx(t), wy(t), wz(t), and w(t) are passed to processor 18 which converts them to (x, y, z) coordinates. Each point is subsequently processed as if part of an ordinary polyline by clipping processor 20 and frame buffer 22. The particular organization of the NURBS data in memory 12 and processing thereof by the above described pipelined apparatus, affords the numerous benefits of the present invention.

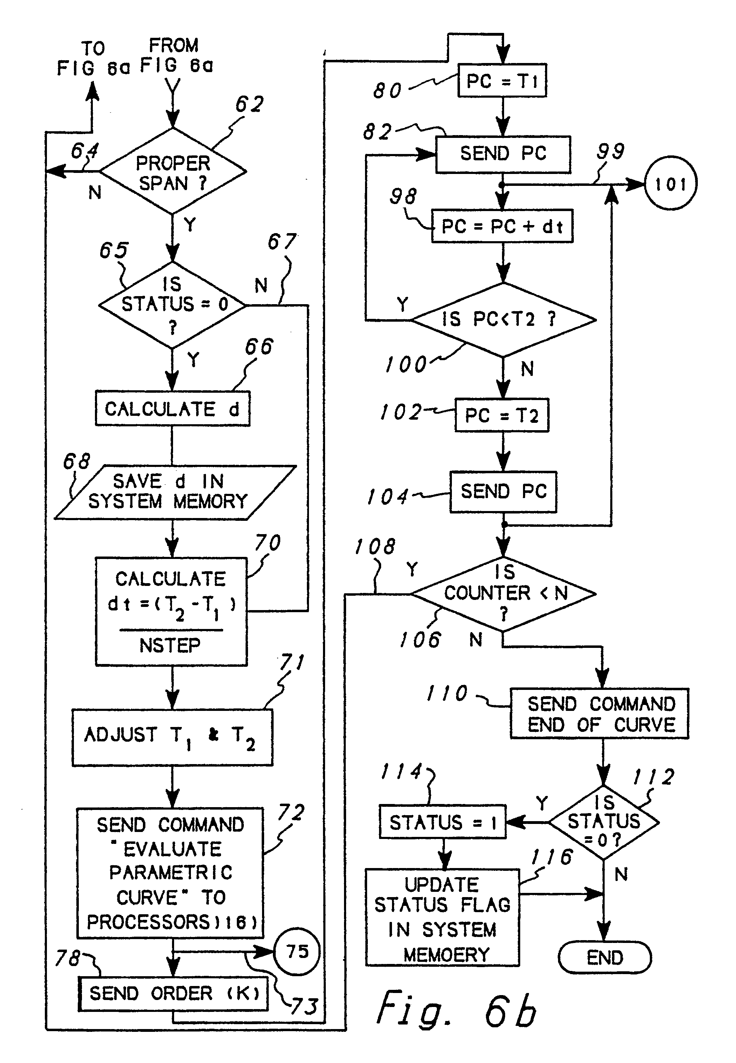

The particular operations of the graphics control processor 14, as well as the operation of the other processors in the curve evaluation system 10 are shown in flowcharts of Figures 6A-6D and will now be explained in detail.

Referring to Figure 6A, the header information which includes the order (k), number of control points (n), curve type flag, curve status flag, tmin and tmax, is read from system memory (operation 30) and stored in registers within the graphics control processor 14. A register, called counter, will be used to keep track of the number of control points processed, and will initially be set to zero (operation 32).

Next, the graphics control processor will send the command "Start Parametric Curve" (operation 34) and the order (k) (operation 36) to each of the parallel floating point processors (16).

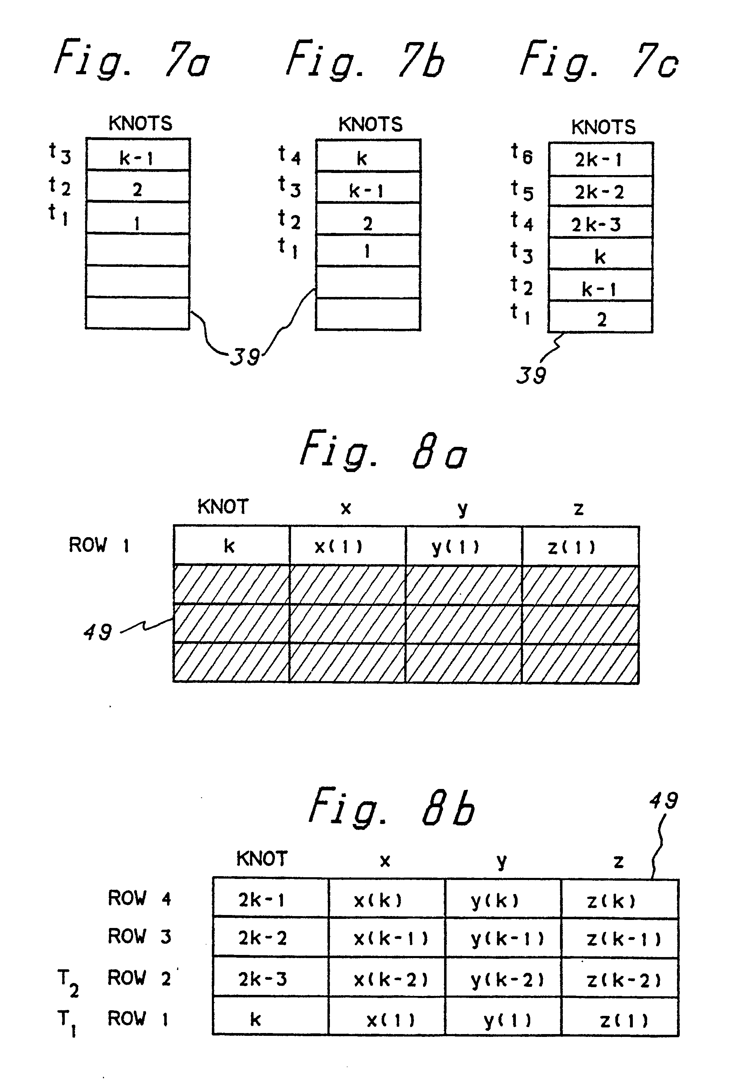

Then, the graphics control processor will read from system memory k-1 initial knots (operation 38) and will transmit these values to all of the parallel floating point processors (16). A stack 39 within each of the parallel floating point processors will hold the knot values transmitted to said processors. Each stack 39 will be large enough to hold 2k-2 rows of data, and it will operate in a first in-first out (FIFO) manner. Figure 7a is an illustration of such a stack where as an example, k = 4. As can be seen from the illustration, the first k-1 knots were pushed on the stack and the rest of the stack is initially unused.

Next, a data record containing a knot value (t(k)), a control point (x(1), y(1), z(1)), a weight (w(1)), and tessellation data, if available, will be read from system memory (operation 40). The counter will be updated by 1 (operation 42), and if the curve type is equal to 1 (inquiry 44), then the weight for each data record will be set to 1 (operation 46), which indicates a non-rational b-spline.

Then, the graphics control processor will transform the control point, which was just received from system memory, from modelling coordinates to view coordinates (x,y,z) (operation 48). A transformation matrix, previously loaded in the graphics control processor, will allow x,y,z to be translated, rotated and scaled as desired, in conventional manner.

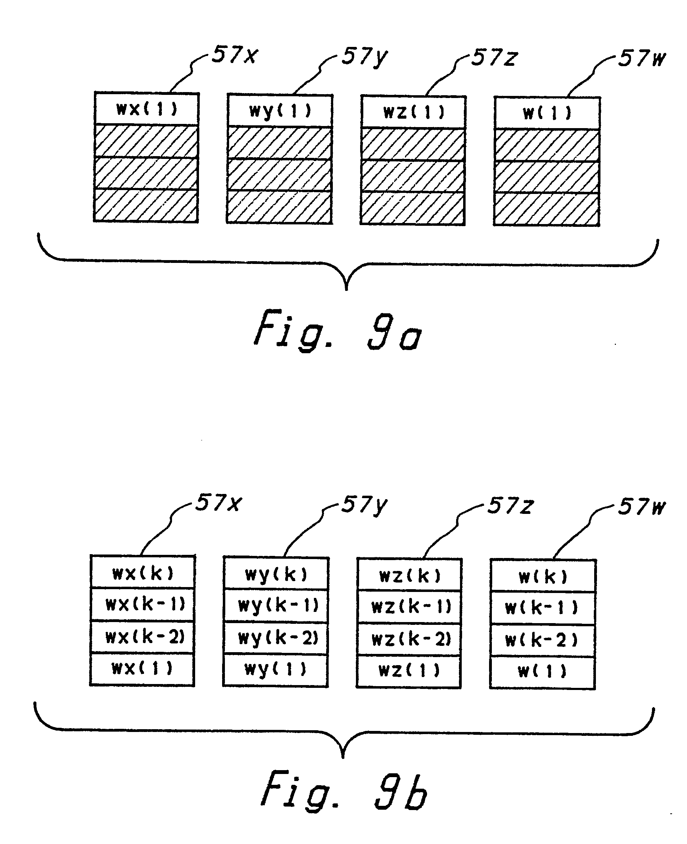

After the transformation process, the graphics control processor will push the knot value (t), and control point coordinates (x,y,z) onto a stack 49 in local memory of the graphics control processor (operation 50). This stack 49 will be large enough to hold k rows of control point data, which is sufficient for one span, and will also operate on a FIFO basis. For an illustration of this local memory stack, see Figure 8a, where k = 4 and the first row of data has been pushed onto the stack and the rest of the stack is empty.

Next, in the graphics control processor, the control point coordinates (x,y,z) just read from system memory will be multiplied by a weight (w) yielding the weighted coordinates (wx,wy,wz,w) (operation 52).

Then, the graphics control processor will send the command "Start Span" (operation 54) to each of the parallel floating point processors (16). This command will be followed by the order (k), a knot value (t (k)), which will be pushed onto the knot stack 39 in each of the parallel floating point processors (see Figure 7b for an illustration of how the knot stack will look after this value is pushed on), and the weighted coordinates (wx,wy,wz, and w) (operation 56). Each component of the coordinate set (wx,wy,wz,w) will be transmitted to only one floating point processor. Therefore, wx will be sent to the first parallel floating point processor (16x), wy will be sent to the second parallel floating point processor (16y), and so forth. Within each of these parallel processors, a stack 57 is used to hold the individual component of the coordinate set (wx,wy,wz,w). Each stack can hold up to k rows of data and operates in a FIFO manner. Figure 9a is an illustration of individual stacks 57x, 57y, 57z and 57w within the respective parallel floating point processors 16, with the respective initial weighted coordinate pushed therein.

Then, it is determined if the counter is greater than or equal to k (operation 58). If it is not, then the flow will return to operation 40 (read 1 data record) via line (60). If it is equal to k, then enough data for one span has been sent to the floating point processors. Thus, the knot stack 39 within each of the parallel floating point processors 16 will have data for knots 2 through 2k-1, as represented in Figure 7c; the stack 49 within the graphics control processor 14 will contain values for knots k through 2k-1 and coordinates (x,y,z) for control points 1 through k as represented in Figure 8b, where k = 4; and each weighted coordinate stack 57 within the appropriate parallel floating point processor 16 will have weighted coordinate data for control points 1 through k, as represented in Figure 9b, where k = 4.

After enough data for one span has been sent to each of the floating point processors 16, the validity of the span will be determined (operation 62). A span is valid if:

$T_1 < Tmax$

$T_2 > Tmin$ and

$T_2 > T_1$ where $T_1$ is equal to the first knot value and $T_2$ is equal to the second knot value on the stack 49 in the graphics control processor 14.

If the span is invalid, then the flow will once again return to operation 40 (read 1 data record) via line 64. If the span is valid and the curve status flag is 0 (operation 65), then the tessellation parameter (d) will be calculated by graphics control processor 14 (operation 66) and that value will be saved in system memory (operation 68). If the curve status flag is not equal to 0, then the flow will skip to 70 (calculate dt) via line 67, which signifies that the tessellation parameter has already been calculated.

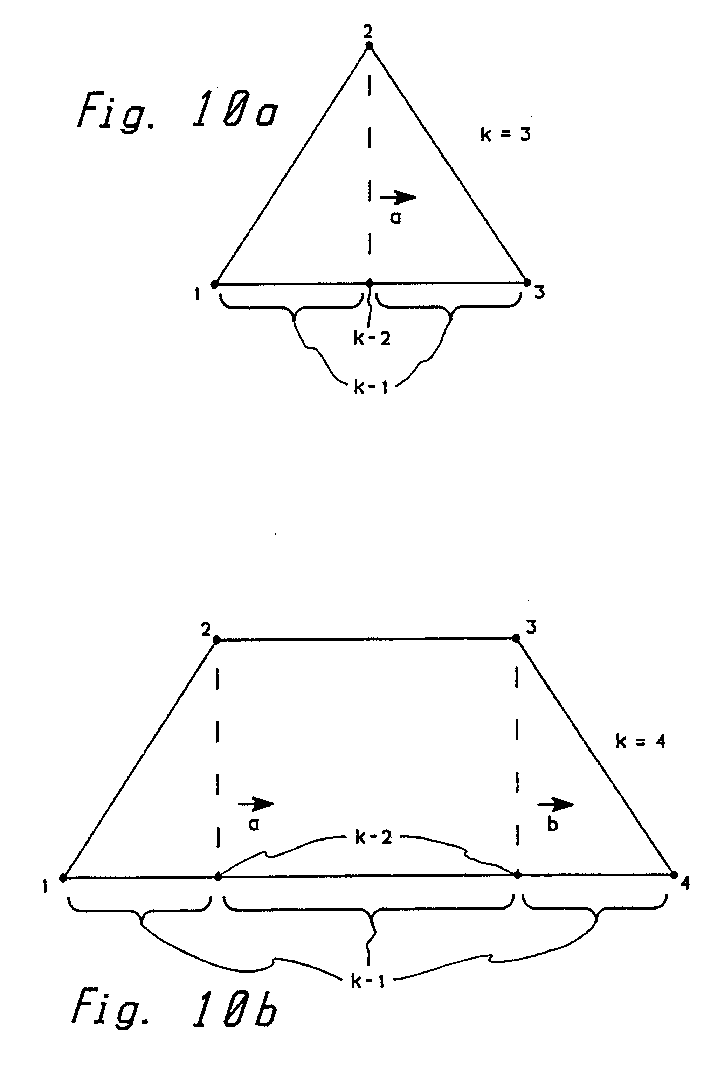

Tessellation is the process by which a curved line is divided into segments, which may be approximated with straight lines. The calculation of the tessellation parameter is dependent on the number of points in a span, which is defined by the order of the curve. As illustrated in Figures 10a and 10b, a curve of order k, has k control points per span and k-1 sections. The k control points consist of 2 end points and k-2 intermediate points. Therefore, if $k = 3$, there would be 2 sections and 1 intermediate point yielding $d = |ax| + |ay| + |az|$ where: d is a bound on the length of vector a and ax, ay, az are the bounds on the chordal deviation. If $k = 4$, there would be 3 sections and 2 intermediate points yielding

$d = |ax| + |bx| + |ay| + |by| + |az| + |bz|$

where d is a bound on the lengths of vectors a and b and ax, ay, az and bx, by, bz are the bounds on the chordal deviation.

After the tessellation parameter (d) is calculated, a parametric coordinate interval, called dt, will be calculated by the graphics control processor 14 (operation 70), as follows:

$dt = (T_2 - T_1)/NStep$

where Nstep is determined by:

(a) calculating the scale, s, which equals the ratio of screen (pixel) coordinates/data coordinates;

(b) converting d into pixel units, which are device coordinates by multiplying d by s yielding $d'$;

(c) calculating Nstep Nstep = Max (1, Int SQRT($d'$))

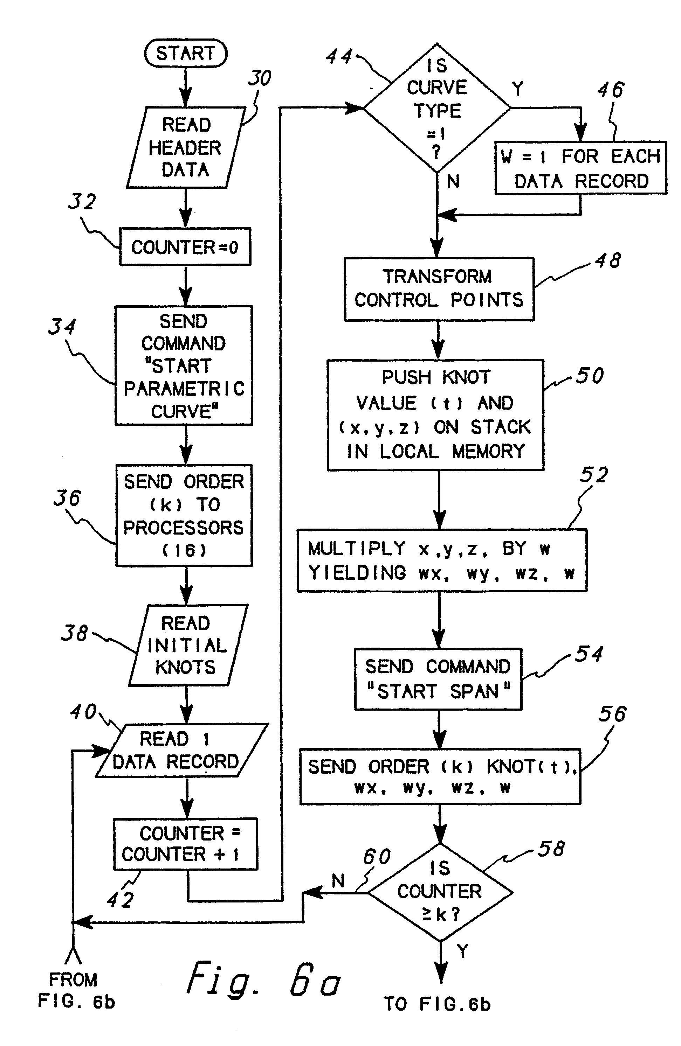

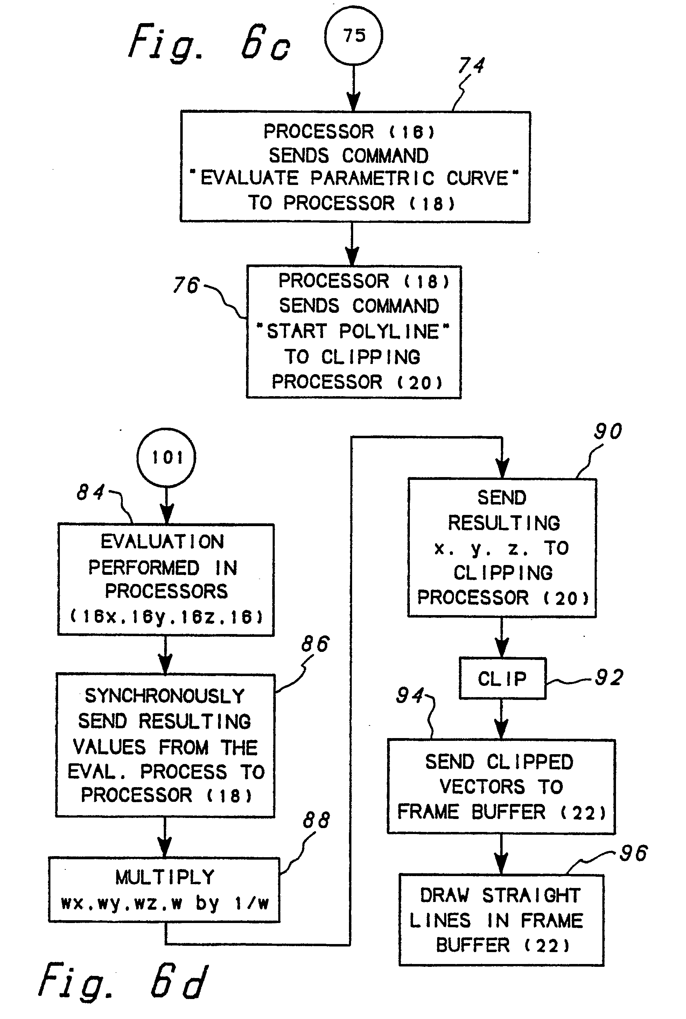

After dt is calculated, $T_1$ and $T_2$ will be adjusted to fit within the boundaries of $T_{min}$ - and $T_{max}$ as follows: If $T_{min}$ - is between $T_1$ and $T_2$, then set $T_1$ equal to $T_{min}$, and if $T_{max}$ is between $T_1$ and $T_2$, then set $T_2$ equal to $T_{max}$ (operation 71). Then, the graphics control processor will send the command "Evaluate Parametric Curve" to the parallel floating point processors 16 (operation 72). When the parallel floating point processors receive this command, they in turn send the command "Evaluate Parametric Curve" to the floating point processor 18 (operation 74) which then sends the command "Start Polyline" to the clipping processor (20) (operation 76). This is illustrated in Figure 6c. While these commands are being sent, the graphics control processor continues to work. This is indicated in Figure 6b by line 73. The graphics control processor sends the order (k) to the parallel floating point processors 16 (operation 78). Then, a parameter point (PC) will be initialized to $T_1$, which is the first knot value of a span (operation 80), and PC will be sent to each of the parallel floating point processors (operation 82).

The operations which take place within the parallel processors and subsequent processors will best be understood by referring to Figure 6d. The tasks in these processors are performed while the graphics control processor continues to work. This is illustrated by line 99 in Figure 6b. Referring to Figure 6d, after the parameter point (PC) is sent to each of the parallel floating point processors, each processor will begin evaluating the b-spline functions for one component of the control point coordinate set (wx,wy,wz,w) (operation 84). For example, the first parallel floating point processor 16x will evaluate the x coordinate of the parameter point, the second parallel floating point processor 16y will evaluate the y coordinate, and so forth. All four of the parallel floating point processors 16 evaluate their respective coordinates simultaneously.

In a preferred embodiment, a process known in the art as the Cox-DeBoor (or Decasteljau) process is employed for evaluation. This process performs a linear interpolation between the components of the control points. A total of k (k-1)/2 interpolations will be performed for each value of PC sent to the floating point processor for each coordinate.

In order to illustrate this process, an example will be given for a cubic curve. Figure 11a depicts the x coordinates of k control points, where $k = 4$; a span beginning at knot value $T_1$ and ending at knot value $T_2$, where $T_1$ and $T_2$ represent the first and second knot values respectively on the stack 49 in the graphics control processor (for an illustration of this stack, see Figure 8b); a parameter point, PC, three knot values

9

before the span ($t_1$, $t_2$, $t_3$) and three knot values after the span ($t_4$, $t_5$, $t_6$). The six knot values, $t_1$ - $t_6$ represent the knot values on the stack 39 in each of the floating point processors (for an illustration of this stack, see Figure 7c).

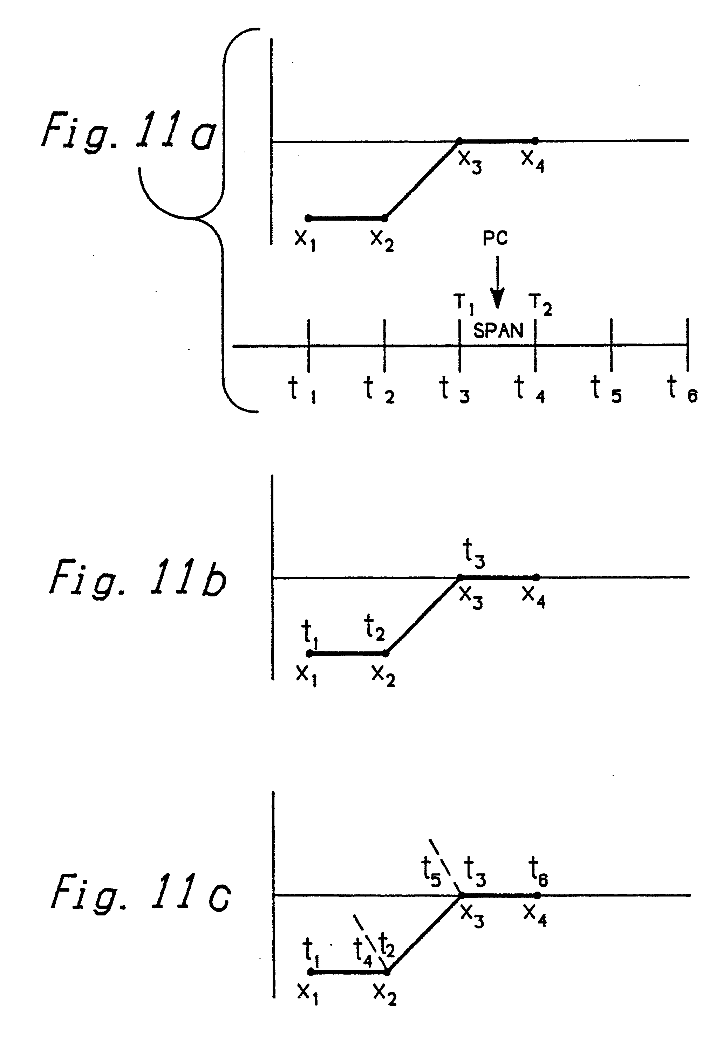

Figure 11b is an illustration of the positioning of the before knots ($t_1$, $t_2$, $t_3$), which represent the beginning of each piece to be interpolated, and Figure 11c is an illustration of the positioning of the after knots ($t_4$, $t_5$, $t_6$), which represent the end of each piece to be interpolated. Therefore, an interpolation will be performed between $t_1$ and $t_4$, $t_2$ and $t_5$, and $t_3$ and $t_6$.

The Cox-DeBoor evaluation process uses the above-mentioned variables in the following equations.

The example below is for a cubic curve:

$f_1 = ((t_4 - PC)x_1 + (PC-t_1)x_2)/(t_4 - t_1)$
$f_2 = ((t_5 - PC)x_2 + (PC-t_2)x_3)/(t_5 - t_2)$
$f_3 = ((t_6 - PC)x_3 + (PC-t_3)x_4)/(t_6 - t_3)$

The above 3 equations are used in the first stage of linear interpolations for a cubic curve. An interpolation is performed between $t_1$ and $t_4$, $t_2$ and $t_5$, and $t_3$ and $t_6$ in order to yield 3 points. These 3 points are illustrated in Figure 11d by a circle with a point inside the circle.

The second stage of interpolation requires a repositioning of the knot values. At this stage, we only have 3 points, therefore we only require knots $t_2$ through $t_5$. Knots $t_2$ and $t_3$ are the new before knots and $t_4$ and $t_5$ are the new after knots. The following two equations are used during this second stage of linear interpolations for a cubic curve:

$f_1 = ((t_4 - PC)f_1 + (PC-t_2)f_2/(t_4 - t_2)$
$f_2 = ((t_5 - PC)f_2 + (PC-t_3)f_3/(t_5 - t_3)$

An interpolation is performed between $t_2$ and $t_4$, and $t_3$ and $t_5$ to yield 2 points. These 2 points are illustrated in Figure 11e by a circle with a point inside the circle.

The last stage of interpolation again requires a repositioning of the knot values. At this stage we have only 2 points, therefore we only require knots $t_3$ and $t_4$. The following equation is used to yield the x coordinate of a point on the cubic curve.

$f(t) = ((t_4 - PC)f_1 + (PC - t_3)f_2/(t_4 - t_3)$

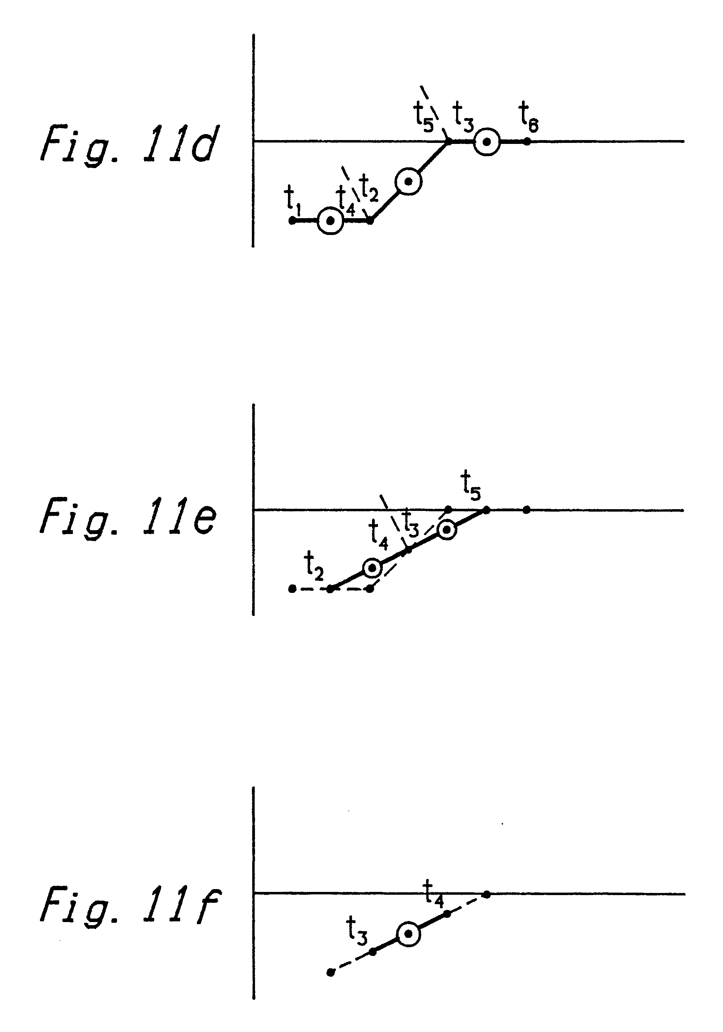

This point is illustrated in Figure 11f by a circle with a point inside the circle. The above evaluation process is performed simultaneously on each coordinate (x,y,z,w) within the respective parallel floating point processor utilizing the same PC value, and the same knot values. However, each processor works on only one coordinate of the control point. The first processor 16x works on the x coordinate, the second processor 16y on the y coordinate, and so forth.

After the interpolation is complete for each coordinate value of PC, the parallel floating point processors 16 will send the resulting coordinate values (wx(t), wy(t), wz(t), w(t)) to floating point processor 18 in a synchronized manner such that these coordinate values are received in series (operation 86). Upon receiving each set of coordinate values, this processor 18 will compute 1/w(t) and multiply this by (wx(t), wy(t), wz(t), w(t)) (operation 88) to obtain the geometric coordinates (x,y,z). These coordinates are then sent to the clipping processor 20 (operation 90).

The clipping processor receives the coordinates sent by the processor 18, and clips the vectors defined by each sequential pair of coordinates to the current viewing boundaries (operation 92). These resulting sets of clipped vectors are sent to the frame buffer 22 (operation 94) where they are drawn as straight line segments (96).

Referring to Figure 6d, the above evaluation process and subsequent steps are performed Nstep + 1 times, with each PC being incremented by a value of dt until PC ≥ $T_2$. (operation 98) If PC becomes greater than $T_2$ (operation 100), then PC will be set equal to $T_2$ (operation 102) and this last value will also be sent to the parallel floating point processors as previously explained (operation 104).

After all values of PC have been evaluated, the counter is examined to see if it is less than the number of control points (operation 106). If it is, then the flow returns to operation 40 (read 1 data record) via line 108, and the whole process is repeated until it is completed n times.

After the process has been completed n times, the graphics control processor 14, sends the command "End of Curve" (operation 110) to the parallel floating point processors 16.

Then, the status flag is analyzed (operation 112) and if it equals zero, it is updated to one (operation 114). This change is then written back to the system memory (operation 116).

An apparatus and method for evaluating and rendering parametric curves based on non-uniform rational b-splines (NURBS) using parallel and pipelined processors have been described herein. The deliberate use of processors in a parallel and pipelined manner enable curves to be evaluated and rendered much more quickly than in the past. Also, the particular organization of the data stored in system memory chosen for this invention permits the elimination of data redundancy and facilitates the efficient processing of the data.

NURBS because of their inherent characteristics provide many advantages, and the present invention fully utilizes those advantages. NURBS allow curves to be divided into sequences of spans, in which each span is represented by a different set of parametric polynomials. The parametric polynomials which describe adjacent spans of a NURBS curve provide a specific degree of continuity. The degree of continuity may be controlled so that a smooth curve or a curve with sharp corners may be drawn. The ability to match successive spans with a specified degree of continuity enables the construction of a complex curve passing through many points using low order NURBS. This property is extremely valuable because it makes it possible to avoid high order functions, which are usually costly to evaluate and prone to numerical instabilities.

Another characteristic of NURBS is local control. Since NURBS are determined by control points, weights and knot vectors, it is possible to alter a span of the curve by moving a control point without affecting the whole of the curve.

The convex hull property offers further advantages. NURBS curves are contained within the convex hull of their control points. The convex hull is the smallest convex polygon (for a 2-dimensional case) or the smallest convex polyhedron (for a 3-dimensional case) which contains a given set of points. Each span of a curve must lie within the convex hull of the k control points which determine that span. This characteristic makes it possible to make estimates of and place bounds on the size and location of a NURBS curve without evaluating any points. This is particularly important in trivial rejection testing. In other words, if the convex hull does not overlap with the current screen, then the curve is not evaluated and it is rejected. If the curve is not rejected, then the convex hull may be used to determine the points at which the curve is evaluated.

The weights associated with the control points provide exact representations of conic sections, which include circles and ellipses. This is a particularly important advantage since many objects require circular forms.

A further advantage is that transformations are accomplished using control points rather than vertices. Since there are usually fewer control points than vertices, this method is more economical.

The evaluation technique employed herein uses the control points directly which results in reduced set-up cost. The interpolation formulas preserve the numerical stability of the NURBS functions, and each point is computed independently, so there are no cumulative errors as the calculations progress across a span. Consequently the last point on a curve will be just as accurate as the first, and each span will match the next with maximum accuracy.

NURBS curves form very compact data structures resulting in significantly improved data transfer rates, better use of system resources and the ability to support more complex graphics, as compared to the traditional polyline data. These advantages are preserved by processing the NURBS data in its original form and enhanced by the approach of span sharing data sequencing.

There has been described, a curve evaluation system which organizes and locates in memory, NURBS data representative of a multispan parametric curve of order k, as a sequence of data records. The data records in the sequence are arranged such that successive spans of the curve are defined by successive individual records in conjunction with a plurality of immediately preceding prior data records of the sequence. Data records are read in sequence by a graphics control processor, which selectively passes the NURBS data and commands to a pipelined arrangement of floating point processors. The pipelined arrangement includes four parallel processors having their outputs connected to the input of a further processor. The parallel processors serve to simultaneously evaluate the b-spline functions for individual components of a set of homogeneous coordinates (wx, wy, wz, w) at determined parameter points along the curve. The further floating point processor converts the homogeneous coordinates to geometric coordinates for subsequent rendering of the curve on a screen of the graphics display system.

The apparatus and method for evaluating and rendering parametric curves based on NURBS, disclosed herein, have many advantages, which include high performance, good numerical stability, cost effectiveness, high speed and accuracy, greater control over the curves, compatibility with the proposed PHIGS PLUS standard for interactive 3-D graphics, and the elimination of data redundancy.

Although a preferred embodiment has been depicted and described in detail herein, it will be apparent to those skilled in the relevant art that various modifications, additions, substitutions and the like can be made without departing from the scope of the invention.

## Claims

1. A method of converting NURBS data representative of a parametric curve into geometric coordinates of vertices of a polyline for subsequent rendering on the screen of a computer graphics display system, said curve being composed of successive spans, comprising the steps of:

organizing and locating the NURBS data in memory as a sequence of data records, a first subset of said sequence defining a first span of the curve and each successive individual data record of the sequence, in conjunction with prior data records, defining a corresponding successive span of the curve;

reading said first subset of data records in said sequence and employing said subset to evaluate the coordinates of determined parameter points along the first span of the curve; and

reading each successive individual data record of the sequence and evaluating the coordinates of determined parameter points along the corresponding successive span therewith.

2. A method as claimed in claim 1 wherein evaluation of points along a corresponding successive span employs a successive individual data record and 2k-3 immediately preceding data records, where k is the order of the parametric curve.

3. A method as claimed in claim 2 wherein the NURBS data comprises k control points per span, and further comprising the step of transforming the control points from modelling coordinates to view coordinates prior to evaluation.

4. A method as claimed in claim 3 further comprising the step of converting the transformed control point coordinates to a set of homogenous coordinates of the form wx, wy, wz, w, where w signifies a weight; the evaluation step comprises simultaneously evaluating the b-spline functions of each component of said coordinate set for determined parameter points along the curve resulting in values of wx(t), wy(t), wz(t), and w(t), where t is the parametric value at a parameter point; and further comprising the step of determining the geometric coordinates of each parameter point by computing the ratio of $\underline{wx(t)}$ , $\underline{wy(t)}$ , and $\underline{wz(t)}$ .

5. A method as claimed in claim 4 wherein the evaluation is performed (a) in accordance with a Cox-DeBoor process and (b) by a plurality of parallel floating point processors, each of said processors simultaneously evaluating a different component of said coordinate set.

6. A method as claimed in claim 5 wherein each span of the curve is defined by k control points and 2k-2 knot values; and wherein said sequence comprises:

a first sequence portion specifying the order k and number of control points n of the curve;

a second sequence portion comprising knot values for the first through the k-1 knots of the curve;

a third sequence portion comprising k-1 successive sets of data, each set comprising coordinates and an associated weight w for a control point and a knot value, the data sets including data for the first through k-1 control points and k through 2k-2 knots of the curve;

a fourth sequence portion comprising n-k+1 additional successive sets of data, these data sets including data for the k through n control points and 2k-1 through n+k-1 knots of the curve; and

a fifth sequence portion comprising a n+k knot value.

7. A method as claimed in claim 6 wherein each data set of the fourth sequence portion also includes a tessellation parameter.

8. A method as claimed in claim 7 further comprising the steps of:

determining a parametric coordinate interval based on the tessellation parameter; and

generating a series of determined parameter points, successive points being spaced apart by said parametric coordinate interval.

9. A method as claimed in claim 8 wherein the parametric curve has a non-rational form and further comprising the step of setting the weight w equal to 1.

10. A method of evaluating and rendering a parametric curve of order k upon a screen of a computer graphics display system, the curve being represented by NURBS data and composed of successive spans, each span being defined by k control points and 2k-2 knot values, comprising the steps of:

organizing and locating the NURBS data including modelling coordinates of control points and associated weights and knot values in a memory as a sequence of data records such that successive spans of the parametric curve are defined by individual successive data records in conjunction with the immediately preceding 2k-3 prior data records of the sequence;

reading the data records from memory in said sequence;

transforming the control point modelling coordinates to view coordinates;

multiplying the transformed coordinates of a control point by its associated weight to produce a set of homogenous coordinates wx, wy, wz, w for each control point;

calculating a parametric coordinate interval and generating therefrom a series of parameter points, successive parameter points being spaced apart by said interval;

with parallel floating point processors simultaneously evaluating the b spline functions for each component of the coordinate set at each parameter point of said series;

eliminating the weight from the results of the evaluation step to yield geometric coordinates for the series of parameter points;

clipping vectors defined by each sequential pair of points in geometric coordinates to a current viewing window; and

drawing the clipped vectors as straight line segments on a screen of a computer graphics display system to thereby render the parametric curve.

11. A method as claimed in claim 10 wherein all of the steps following the calculating step are performed in pipeline fashion.

12. A method as claimed in claim 11 wherein the sequence in which the NURBS data is organized comprises:

prefatory data specifying the order k and number of control points n of the curve;

initial knot values for the curve;

a series of data sets associated with a first span of the curve, each set comprising an after knot and modelling coordinates and a weight for a control point;

a series of individual augmented data sets, each individual augmented data set completing a successive span of the curve, each augmented data set comprising a successive knot value, modelling coordinates and a weight for a successive control point, and a tessellation parameter; and

a final knot value for the curve.

13. Apparatus for converting NURBS data representative of a parametric curve of order k into geometric coordinates of vertices of a polyline for subsequent rendering on the screen of a computer graphics display system, said curve being composed of successive spans, each span being defined by k control points and 2k-2 knot values, comprising:

memory means for storing NURBS data of said curve as a sequence of data records such that successive spans of the curve are defined by successive individual data records in conjunction with a plurality of immediately preceding data records of the sequence;

graphics control processor means for reading the data records from said memory means in said sequence and for converting control point coordinates to a set of homogenous coordinates;

a plurality of parallel floating point processors for receiving data from said graphics control processor means and simultaneously evaluating the b-spline functions of respective ones of said set of homogenous coordinates at each of a series of parameter points along the curve; and

a further floating point processor for receiving the outputs of said parallel floating point processors and converting said outputs into geometric coordinates of said parameter points for subsequent rendering of the curve on a screen of the computer graphics display system.

14. Apparatus as claimed in claim 13 wherein said graphics control processor means, plurality of floating point processors, and further floating point processor operate in pipeline fashion.

15. Apparatus as claimed in claim 14 wherein the plurality of floating point processors comprises:

four processors, one of which provides an output representative of the weight w(t) for each of said parameter points; and

wherein the further floating point processor multiplies the outputs of the other of said parallel floating point processors by the reciprocal of the output of said one floating point processor.

16. Apparatus as claimed in claim 15 wherein the parallel floating point processors employ the Cox-DeBoor process for the evaluation; and the outputs of the individual floating point processors of said plurality are provided sequentially to said further floating point processor.

17. Apparatus as claimed in claim 16 wherein said sequence comprises:

prefatory data specifying the order k and number of control points n of the curve;

initial knot values for the curve;

a series of data sets associated with a first span of the curve, each set comprising an after knot and modeling coordinates and a weight for a control point;

a series of individual augmented data sets, each individual augmented data set completing a successive span of the curve, each augmented data set comprising a successive knot value, modeling coordinates and a weight for a successive control point, and a tessellation parameter; and

a final knot value for the curve.

18. Apparatus as claimed in claim 17 wherein said graphics control processor means:

first transforms modelling coordinates of control points to view coordinates and then converts the transformed coordinates to said set of homogenous coordinates; and

determines a parametric coordinate interval for tessellating the parametric curve; and

generates a series of interval spaced parameter points for use by the plurality of parallel floating point processors.

19. Apparatus as claimed in claim 18 wherein said graphics control processor means determines the parametric coordinate interval for successive spans of the curve based upon the tessellation parameters of the augmented data sets.

20. Apparatus as claimed in claim 19 further comprising a clipping processor and a frame buffer connected in series to an output of said further floating point processor and operating in pipeline fashion therewith.

SPAN 1

$x(t) = x_1(t)$

$y(t) = y_1(t)$

Fig. 1

C

$t = t_1$

$t = t_0$

$t = t_3$

SPAN 2

$x(t) = x_2(t)$

$y(t) = y_2(t)$

$t = t_2$

SPAN 3

$x(t) = x_3(t)$

$y(t) = y_3(t)$

2 •

3 •

•6

C

1 •

•5

• 4

Fig. 2

Fig. 3

Fig. 4

10

12 SYSTEM MEMORY

14 GRAPHICS CONTROL PROCESSOR

16

16x FLOATING POINT PROCESSOR — wx(t)

16y FLOATING POINT PROCESSOR — wy(t)

16z FLOATING POINT PROCESSOR — wz(t)

16w FLOATING POINT PROCESSOR — w(t)

18 FLOATING POINT PROCESSOR

20 CLIPPING PROCESSOR

22 FRAME BUFFER

EP 0 425 174 A2

| SEQUENCE | 1 | 2 | 3 | 4 | 5 |
|---|---|---|---|---|---|
| HEADER | k, n, FLAGS, tmin, tmax | | | *24a* *24b* | |
| KNOTS (t) | | 1 ... k-1 | k ... 2k-2 | 2k-1 ... n+k-1 | n+k |
| COORDINATES (x) | | | 1 ... k-1 | k ... n | |
| (y) | | | 1 ... k 1 | k ... n | |
| (z) | | | 1 ... k-1 | k ... n | |
| WEIGHTS (w) | | | 1 ... k-1 | k ... n | |
| TESSELLATION (d) | | | | 1 ... n-k+1 | |

*Fig. 5*

START

READ
HEADER
DATA
*30*

*32*
COUNTER=0

*34*
SEND
COMMAND
"START
PARAMETRIC
CURVE"

*36*
SEND ORDER
(k) TO
PROCESSORS
(16)

*38*
READ
INITIAL
KNOTS

*40*
READ 1
DATA RECORD

COUNTER =
COUNTER + 1
*42*

*44*
IS
CURVE
TYPE
=1
?

Y

*46*
W = 1 FOR EACH
DATA RECORD

N

*48*
TRANSFORM
CONTROL POINTS

*50*
PUSH KNOT
VALUE (t) AND
(x,y,z) ON STACK
IN LOCAL MEMORY

*52*
MULTIPLY x,y,z, BY w
YIELDING wx, wy, wz, w

*54*
SEND COMMAND
"START SPAN"

*56*
SEND ORDER (k) KNOT(t),
wx, wy, wz, w

*60*
N

*58*
IS
COUNTER
≥ k ?

Y

FROM
FIG. 6b

*Fig. 6a*

TO FIG.6b

TO FIG 6a   FROM FIG 6a

*62*

*64*

PROPER SPAN ?

N

Y

*65*   *67*

IS STATUS = 0 ?

N

Y

*66*

CALCULATE d

*68*

SAVE d IN SYSTEM MEMORY

*70*

CALCULATE

$$dt = \frac{(T_2 - T_1)}{NSTEP}$$

*71*

ADJUST $T_1$ & $T_2$

*72*

SEND COMMAND "EVALUATE PARAMETRIC CURVE" TO PROCESSORS(16)

*75*

*78*   *73*

SEND ORDER (K)

*80*

PC = T1

*82*   *99*

SEND PC

101

*98*

PC = PC + dt

Y

IS PC<T2 ?

*100*   N

*102*

PC = T2

*104*

SEND PC

*108*   Y

IS COUNTER < N ?

*106*   N

*110*

SEND COMMAND END OF CURVE

*114*   *112*

STATUS = 1   Y

IS STATUS = 0 ?

N

*116*

UPDATE STATUS FLAG IN SYSTEM MEMOERY

END

*Fig. 6b*

*Fig. 6c*

(75)

74

PROCESSOR (16)
SENDS COMMAND
"EVALUATE PARAMETRIC CURVE"
TO PROCESSOR (18)

76

PROCESSOR (18)
SENDS COMMAND
"START POLYLINE"
TO CLIPPING
PROCESSOR (20)

90

SEND
RESULTING
x. y. z. TO
CLIPPING
PROCESSOR (20)

(101)

84

EVALUATION
PERFORMED IN
PROCESSORS
(16x.16y.16z.16)

92

CLIP

86

SYNCHRONOUSLY
SEND RESULTING
VALUES FROM THE
EVAL. PROCESS TO
PROCESSOR (18)

94

SEND CLIPPED
VECTORS TO
FRAME BUFFER (22)

88

MULTIPLY
wx.wy.wz.w by 1/w

96

DRAW STRAIGHT
LINES IN FRAME
BUFFER (22)

*Fig. 6d*

## Fig. 7a

**KNOTS**

| | |
|---|---|
| $t_3$ | k-1 |
| $t_2$ | 2 |
| $t_1$ | 1 |
| | |
| | |
| | |

## Fig. 7b

**KNOTS**

| | |
|---|---|
| $t_4$ | k |
| $t_3$ | k-1 |
| $t_2$ | 2 |
| $t_1$ | 1 |
| | |
| | |

39

## Fig. 7c

**KNOTS**

| | |
|---|---|
| $t_6$ | 2k-1 |
| $t_5$ | 2k-2 |
| $t_4$ | 2k-3 |
| $t_3$ | k |
| $t_2$ | k-1 |
| $t_1$ | 2 |

39

## Fig. 8a

| | KNOT | x | y | z |
|---|---|---|---|---|
| ROW 1 | k | x(1) | y(1) | z(1) |
| | | | | |
| | | | | |
| | | | | |

49

## Fig. 8b

49

| | | KNOT | x | y | z |
|---|---|---|---|---|---|
| | ROW 4 | 2k-1 | x(k) | y(k) | z(k) |
| | ROW 3 | 2k-2 | x(k-1) | y(k-1) | z(k-1) |
| $T_2$ | ROW 2 | 2k-3 | x(k-2) | y(k-2) | z(k-2) |
| $T_1$ | ROW 1 | k | x(1) | y(1) | z(1) |

57x     57y     57z     57w

| wx(1) | wy(1) | wz(1) | w(1) |
|-------|-------|-------|------|

**Fig. 9a**

57x     57y     57z     57w

| wx(k) | wy(k) | wz(k) | w(k) |
|---------|---------|---------|--------|
| wx(k-1) | wy(k-1) | wz(k-1) | w(k-1) |
| wx(k-2) | wy(k-2) | wz(k-2) | w(k-2) |
| wx(1) | wy(1) | wz(1) | w(1) |

**Fig. 9b**

Fig. 10a

k = 3

k-2

k-1

k = 4

k-2

k-1

Fig. 10b

Fig. 11a

$x_3$  $x_4$

$x_1$  $x_2$

PC

$T_1$  $T_2$

SPAN

$t_1$  $t_2$  $t_3$  $t_4$  $t_5$  $t_6$

Fig. 11b

$t_3$

$x_3$  $x_4$

$t_1$  $t_2$

$x_1$  $x_2$

Fig. 11c

$t_5$  $t_3$  $t_6$

$x_3$  $x_4$

$t_1$  $t_4$  $t_2$

$x_1$  $x_2$

Fig. 11d

Fig. 11e

Fig. 11f